# EUROPÄISCHE PATENTANMELDUNG

(11) **EP 4 279 467 A1**
(43) Veröffentlichungstag der Anmeldung: **22.11.2023**
(21) Anmeldenummer: 23171745.5
(22) Anmeldetag: 05.05.2023
(51) Int. Cl.: C04B 28/00

(54) **HERSTELLUNG EINES GEOPOLYMERS UNTER VERWENDUNG VON STAHLWERKSSCHLACKE**

(30) Priorität: 16.05.2022 BE 202205370; 16.05.2022 DE 102022204807
(71) Anmelder: ThyssenKrupp MillServices & Systems GmbH, 46149 Oberhausen (DE); thyssenkrupp AG, 45143 Essen (DE)
(72) Erfinder: Dohlen, Michael, 47058 Duisburg (DE)
(74) Vertreter: thyssenkrupp Intellectual Property GmbH

(57) **Zusammenfassung**

Die vorliegende Erfindung betrifft ein Verfahren zur Herstellung von Geopolymer, wobei ein körniger reaktiver Feststoff mit einer basischen Aktivierungslösung vermischt wird, wobei die basische Aktivierungslösung Alkalihydroxide und/oder Alkalisilikate aufweist, dadurch gekennzeichnet, dass als reaktiver Feststoff Stahlwerksschlacke oder eine Mischung von Stahlwerksschlacke mit Flugasche und/oder Hüttensand verwendet wird.

## Beschreibung

Die Erfindung betrifft die Herstellung eines Baustoffes aus einem Geopolymer, beispielsweise als Beton-Ersatzbaustoff.

Die Herstellung von Beton führt zu hohen klimaschädlichen Emissionen, insbesondere Kohlendioxid (CO₂), weil einerseits die Zementherstellung durch Mahlen und Brennen von Gestein energieaufwendig ist, andererseits gebundenes Kohlendioxid (CO₂) aus dem Kalkstein freigesetzt wird. Die Zementproduktion hat einen Anteil von mehr als 5 % an den weltweiten CO₂-Emissionen.

Als weiteres Problem kommt hinzu, dass der Mensch die natürlichen Ressourcen massiv verbraucht, sodass sich diese zunehmend verknappen. Dieses gilt derzeit insbesondere auch für Sand. Daher soll auch zunehmend Sand durch andere Sekundärrohstoffe ersetzt werden, um die natürlichen Ressourcen zu schonen.

Aus der nachveröffentlichten DE 10 2022 202 235 ist der Einsatz von Gießereialtsand zur Herstellung einer raumstabilen Stahlwerksschlacke bekannt.

Aus der nachveröffentlichten DE 10 2022 202 234 ist ein Dichtungsbaustoff unter Verwendung von Stahlwerksschlacke bekannt.

Aus der nachveröffentlichten DE 10 2022 202 474 ist die Verwendung von LD-Schlacke zur Herstellung von dampfgehärteten CSH-Baustoffen bekannt.

Aus der CN 113 336 487 A ist ein Geopolymer bekannt.

Aus der CN 110 015 853 A ist ein Geopolymer bekannt.

Aus der CN 106 587 782 A ist ein Geopolymer bekannt.

Aufgabe der Erfindung ist es, eine umweltfreundliche und zementfreie Alternative für Beton bereitzustellen.

Gelöst wird diese Aufgabe durch das Verfahren mit den in Anspruch 1 angegebenen Merkmalen sowie durch das reagierte Geopolymer mit den in Anspruch 7 angegebenen Merkmalen. Vorteilhafte Weiterbildungen ergeben sich aus den Unteransprüchen, der nachfolgenden Beschreibung.

Das erfindungsgemäße Verfahren dient zur Herstellung von einem Geopolymer. Geopolymere an sich sind wenigstens seit 1975 bekannt. Es handelt sich dabei um mineralische und kaltaushärtende Bindemittel, die nach der festigkeitsgebenden Reaktion eine polymere Struktur aufweisen und so den fertigen Baustoff bilden. Zur Herstellung von Geopolymeren wird ein körniger reaktiver Feststoff mit einer basischen Aktivierungslösung vermischt. Die basische Aktivierungslösung weist Alkalihydroxide und/oder Alkalisilikate auf. Es entsteht beispielsweise ein alumosilikatisches Netzwerk. Als Feststoff wird nach dem Stand der Technik üblicherweise natürlicher Quarzsand als Feststoff verwendet. Üblicherweise ist das Verhältnis von Feststoff zu Aktivierungslösung von 2 zu 1 gewählt. Vorteil der Geopolymere ist, dass diese dadurch stabil auch gegenüber Säuren und Laugen sind (mit Ausnahme von Flusssäure).

Erfindungsgemäß wird als reaktiver Feststoff ein Feststoff verwendet, der aus Stahlwerksschlacke oder einem Gemisch aus Stahlwerksschlacke sowie Flugasche und/oder Hüttensand besteht. Somit kann der Feststoff Stahlwerksschlacke oder ein Gemisch aus Stahlwerksschlacke und Flugasche, Stahlwerksschlacke und Hüttensand oder Stahlwerksschlacke und Flugasche und Hüttensand sein. Insbesondere wird als Stahlwerksschlacke Elektroofenschlacke verwendet. Weitere Stahlwerksschlacken sind insbesondere Konverterschlacke oder auch LD-Schlacke, Edelstahlschlacke sowie sekundärmetallurgische Schlacke. Die Stahlwerksschlacke kann auch eine Mischung dieser Schlacken sein. Die Stahlwerksschlacke und noch viel mehr insbesondere die Elektroofenschlacke weist hervorragende reaktive Eigenschaften auf, um zu einem Baustoff aus Geopolymer umgesetzt zu werden. Zusätzlich ist gerade die Elektroofenschlacke eine Schlacke, die auch dann entstehen wird, wenn der derzeitige Stahlprozess beispielsweise auf eine Wasserstoffdirektreduktion umgestellt wird, also die klassische Hochofenschlacke beziehungsweise Hüttensand aus der Verhüttung von Eisenerz mit Koks nicht mehr zur Verfügung stehen wird.

Somit wird das Geopolymer aus den Komponenten, reaktiver Feststoff und Aktivierungslösung nach diesem Verfahren hergestellt. Der reaktive Feststoff ist entweder eine reine Stahlwerksschlacke oder eine Mischung aus einer Stahlwerksschlacke sowie Flugasche und/oder Hüttensand. Es ist somit möglich, einen mit Beton vergleichbaren Baustoff aus dem Geopolymer bereitzustellen, welcher jedoch nicht die hohen Kohlendioxidemissionen aufweist, wie diese bei der Zementherstellung anfallen.

In einer weiteren Ausführungsform der Erfindung wird die Stahlwerksschlacke auf eine Partikelgröße von 0 bis 2 mm gebrochen oder gemahlen. Dieses bedeutet, dass die Partikel eine Streuung innerhalb dieses Bereiches aufweisen können. Dieses kann insbesondere dadurch erzielt werden, dass die gebrochene oder gemahlene Schlacke mit einem Sieb von 2 mm Maschenweite gesiebt wird und die Feinfraktion verwendet wird.

In einer weiteren Ausführungsform der Erfindung wird die Stahlwerksschlacke mit einem Gewichtsanteil von bis zu 65 % zugesetzt. Dieses bedeutet, dass wenn man das übliche Verhältnis von Feststoff zu Aktivierungslösung von 2 zu 1 berücksichtigt, praktisch der gesamte Feststoffanteil Stahlwerksschlacke, insbesondere Elektroofenschlacke, ist.

In einer weiteren Ausführungsform der Erfindung wird eine Stahlwerksschlacke mit einem Blaine-Wert von 3000 bis 4000, bevorzugt von 3250 bis 3750, weiter bevorzugt von 3400 bis 3600, ausgewählt. Der Blaine-Wert ist ein standardisiertes Maß für den Grad der Feinvermahlung von Zement. Er wird angegeben als labortechnisch mit dem Blaine-Gerät ermittelte spezifische Oberfläche (cm²/g).

In einer weiteren Ausführungsform der Erfindung wird zusätzlich Flugasche und/oder Hüttensand als weiterer Feststoff zugegeben. Insbesondere wird Stahlwerksschlacke und Flugasche in einem Verhältnis von 25 zu 75 bis 50 zu 50 zugegeben.

In einem weiteren Aspekt betrifft die Erfindung ein reagiertes Geopolymer erzeugt nach dem erfindungsgemäßen Verfahren. Das reagierte Geopolymer kann, wie beispielsweise Beton, in eine geeignete Form gebracht sein, beispielsweise als Bauelement, wie beispielsweise ein Pflasterstein. Es kann aber auch ein ganzes Bauteil aus dem reagierten Geopolymer gefertigt sein, beispielsweise ein Kanalsegment. Das reagierte Geopolymer ist somit ein Baustoff wie Beton.

## Patentansprüche

1. Verfahren zur Herstellung von Geopolymer, wobei ein körniger reaktiver Feststoff mit einer basischen Aktivierungslösung vermischt wird, wobei die basische Aktivierungslösung Alkalihydroxide und/oder Alkalisilikate aufweist, **dadurch gekennzeichnet, dass** als reaktiver Feststoff ein Feststoff verwendet wird, der aus Stahlwerksschlacke oder einem Gemisch aus Stahlwerksschlacke sowie Hüttensand und/oder Flugasche besteht.

2. Verfahren nach Anspruch 1, **dadurch gekennzeichnet, dass** als Stahlwerksschlacke eine Elektroofenschlacke verwendet wird.

3. Verfahren nach einem der vorstehenden Ansprüche, **dadurch gekennzeichnet, dass** die Stahlwerksschlacke auf eine Partikelgröße von 0 bis 2 mm gebrochen wird.

4. Verfahren nach einem der vorstehenden Ansprüche, **dadurch gekennzeichnet, dass** die Stahlwerksschlacke mit einem Gewichtsanteil von bis zu 65 % bezogen auf die Summe aus reaktivem Feststoff und der basischen Aktivierungslösung zugesetzt wird.

5. Verfahren nach einem der vorstehenden Ansprüche, **dadurch gekennzeichnet, dass** eine Stahlwerksschlacke mit einem Blaine-Wert von 3000 bis 4000 ausgewählt wird.

6. Verfahren nach einem der vorstehenden Ansprüche, **dadurch gekennzeichnet, dass** Stahlwerksschlacke und Flugasche in einem Verhältnis von 25 zu 75 bis 50 zu 50 zugegeben werden.

7. Reagiertes Geopolymer erzeugt nach einem der vorhergehenden Verfahrensansprüche.
